# DEMANDE DE BREVET EUROPEEN

(11) **EP 0 794 282 A1**
(43) Date de publication de la demande: **10.09.1997**
(21) Numéro de dépôt: 97400507.6
(22) Date de dépôt: 06.03.1997
(51) Int. Cl.: D21C 5/02

(54) **Produit pour le désencrage de la pâte à papier**

(30) Priorité: 06.03.1996 FR 9602801
(71) Demandeur: Gonzalez, Pierre, 33230 Coutras (FR)
(72) Inventeur: Gonzalez, Pierre, 33230 Coutras (FR)
(74) Mandataire: Hud, Robert

(57) **Abrégé**

Le produit de désencrage pour pâte à papier est utilisé seul pendant les phases successives de l'opération de désencrage. Ce produit est constitué par un mélange de 80% de phosphate trisodique, de 4% de carbonate de sodium, de 8% de sel sodique de méthyltaurid à base d'acide gras, et de 8% de percarbonate de sodium.

L'invention s'applique au désencrage de pâte à papier.

## Description

La présente invention concerne le désencrage de la pâte à papier. Elle concerne plus particulièrement un produit utilisable pour le désencrage de la pâte à papier.

Traditionnellement, le désencrage de la pâte à papier s'effectue en introduisant séparément plusieurs produits tout le long du processus, c'est-à-dire de la soude caustique en grande quantité et du silicate de sodium dans le pulper pour détacher les encres, des acides gras ou un surfactant synthétique pour faciliter la montée de ces encres dans les cellules de flottation ainsi que, à la fin du processus, du peroxyde dans une tour de blanchiment afin de blanchir les fibres.

L'introduction séparée des produits ci-dessus, dans des proportions déterminées, en divers moments du processus de désencrage, outre les risques d'erreur que cela entraîne, complique et retarde ce processus.

De plus, l'utilisation de la soude caustique présente des inconvénients car ce corps, outre qu'il est dangereux pour l'opérateur, réduit considérablement l'efficacité des filtres rotatifs lorsqu'il est mélangé au silicate de sodium et ne présente qu'une efficacicté limitée pour détacher des encres de type laser.

La présente invention a pour objet de remédier aux inconvénients mentionnés ci-dessus, liés au processus traditionnel de désencrage avec introduction séparée de plusieurs produits, et à l'utilisation de soude caustique.

A cet effet, selon la présente invention, tout le processus de désencrage de la pâte à papier s'effectue avec utilisation d'un produit unique, lequel est constitué par un mélange comprenant de 78 à 80 % environ de phosphate trisodique et de 4 à 6 % environ de carbonate de sodium, le reste étant constitué par du sel sodique de méthyltaurid à base d'acides gras (de 6 à 10%) et par du percarbonate de sodium (de 6 à 10 %).

Le désencrage réalisé au moyen du produit selon la présente invention ne s'effectue pas à Ph neutre, mais il permet de façon surprenante d'obtenir une efficacité particulière du désencrage sans que le produit unique utilisé ne contrarie aucune des phases successives du traitement.

On remarque que le produit selon l'invention ne comprend pas de soude caustique, ce qui fait qu'il est sans danger pour l'opérateur, qu'il n'a pas d'effet néfaste sur l'efficacité des filtres rotatifs et qu'il n'est pas limité dans le détachement des encres de type laser.

La répartition des actions des différents constituants du produit selon l'invention est la suivante :
- détachement des encres pour le phosphate trisodique,
- équilibrage du ph pour le carbonate de sodium,
- flottation pour l'acide gras,
- blanchiment pour le percarbonate de sodium.

Pour bien faire comprendre l'invention on en décrira, ci-après, à titre d'exemple sans caractère limitatif, une forme de mise-en-oeuvre.

On réalise un produit de traitement pour le désencrage de pâte à papier, en mélangeant dans une cuve 80 % de phosphate trisodique, 4 % de carbonate de sodium, 8 % de sel sodique de méthyltaurid à base d'acide gras et 8 % de percarbonate de sodium.

Une quantité représentant 0,1 % du produit ainsi obtenu par rapport au poids du vieux papier à traiter est introduite dans un pulper pour une durée de 15 à 20 minutes selon le type de vieux papier.

On constate que pendant ce laps de temps, les encres se sont détachées de façon efficace de la pâte à papier désagrégée.

Les fibres de pâte à papier désagrégée, avec un bain de produit selon l'invention, sont transférées dans une cellule de flottation, par exemple du genre de celle décrite dans la demande de brevet du même Inventeur N° 95.02089. Les particules d'encre remontent à la surface du bain sous forme de mousse et sont évacuées, et l'on constate qu'après un temps de traitement de l'ordre de 2 minutes, les fibres et leur bain du produit selon l'invention sont débarrassées de leurs particules d'encre.

La présence de percarbonate de sodium dans le produit selon l'invention permet, dans la majorité des cas, d'éviter l'utilisation d'une tour de blanchiment.

On comprendra que la description ci-dessus a été donnée à titre d'exemple, sans caractère limitatif, et que des modifications pourraient y être apportées sans sortir du cadre de la présente invention.

## Revendications

1. Produit pour le désencrage de la pâte à papier destiné à être utilisé seul pendant les phases de l'opération de désencrage, caractérisé en ce qu'il est constitué par un mélange de phosphate trisodique dans une proportion comprise entre 78 et 80 %, de carbonate de sodium dans une proportion comprise entre 4 et 6 %, par du sel sodique de méthyltaurid à base d'acide gras dans une proportion comprise entre 6 et 10 % et par du percarbonate de sodium dans une proportion comprise entre 6 et 10 %.

2. Produit de désencrage selon la revendication 1, caractérisé en ce que la proportion de phosphate trisodique est de 80 %.

3. Produit de désencrage selon la revendication 1 ou la revendication 2, caractérisé en ce que la proportion de carbonate de sodium est de 4 %.

4. Produit de désencrage selon l'une quelconque des revendications 1 à 3, caractérisé en ce que la proportion de sel sodique de méthyltaurid à base d'acide gras est de 8 %.

5. Produit de désencrage selon l'une quelconque des revendications 1 à 4, caractérisé en ce que la proportion de percarbonate de sodium est de 8 %.
